# EUROPEAN PATENT SPECIFICATION

(11) **EP 0 528 251 B1**
(45) Date of publication and mention of the grant of the patent: **18.12.1996**
(21) Application number: 92113240.3
(22) Date of filing: 03.08.1992
(51) Int. Cl.: G01F 1/68, G01P 9/00, G01P 5/10

(54) **Method of making a semiconductor type gas flow sensor**
Verfahren zur Herstellung eines Halbleitersensors der Gasströmung
Procédé pour fabriquer un capteur d'écoulement gazeux à semiconducteur

(30) Priority: 21.08.1991 JP 293948/91
(43) Date of publication of application: 24.02.1993
(73) Proprietor: HONDA GIKEN KOGYO KABUSHIKI KAISHA, Minato-ku, Tokyo (JP)
(72) Inventor: Hosoi, Takashi, c/o Kabushiki Kaisha Honda, Wako-shi, Saitama (JP); Hirose, Yoshitsugu, c/o Kabushiki Kaisha Honda, Wako-shi, Saitama (JP); Yamakawa, Hiroshi, c/o Kabushiki Kaisha Honda, Wako-shi, Saitama (JP)
(74) Representative: Fincke, Karl Theodor, Dipl.-Phys. Dr.

(56) References cited:
- EP-A- 0 037 794
- EP-A- 0 405 452
- US-A- 4 756 190
- US-A- 4 891 977

## Description

### BACKGROUND OF THE INVENTION

The present invention relates to a method of making a gas flow sensor for electrically sensing a deflection of gas flow or a change of gas flowrate in a gas path by means of a thermosensitive resistor element and more particularly to a semiconductor type gas flow sensor which is composed of semiconductor substrates whereon a gas path is formed by micro-machining technology.

There is known such a gas flow rate sensor which is a kind of gas flow sensor wherein gas is constantly pumped into a gas path and a gas flow deflection caused therein by the action of an angular velocity applied on the sensor body is detected by a pair of thermosensitive resistor elements, e.g. heat wires arranged in parallel to each other in the direction of the gas flow deflection.

Recently, there has been developed a gas rate sensor of the type that its body portion composed of a gas path and a pair of arranged therein heat wires is manufactured by semiconductor micro-machining on the basis of IC technology. This is disclosed in Japanese laid open patent publication No. 29858/92 and European patent application EP-A-0 405 452.

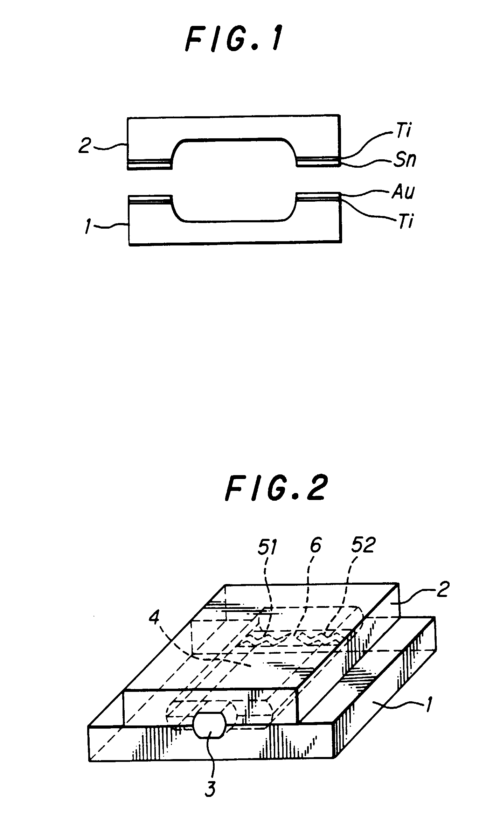

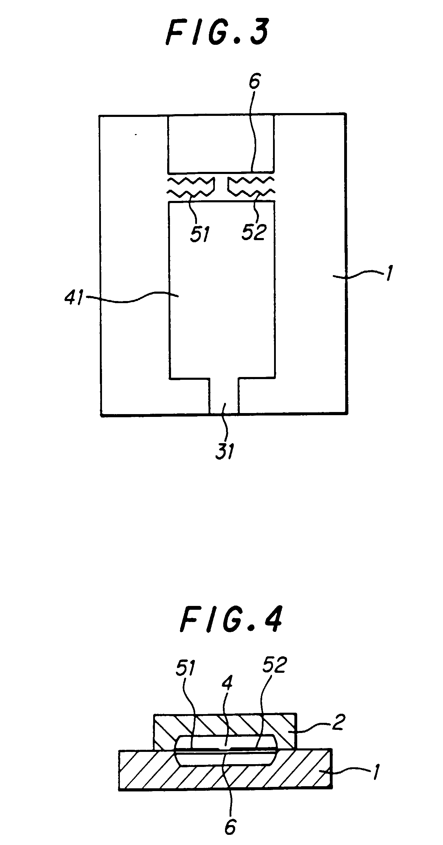

In this type sensor, as shown in Fig. 2, 3 and 4, the body portion is constructed in such a way that a lower semiconductor substrate 1 having an etched thereon half groove 41 and an upper semiconductor substrate 2 having an etched thereon half groove 41 are joined with each other so as to make both half grooves matched to form a gas flow path in the body portion.

In the above-mentioned making of the sensor body portion, the joining between the upper and lower semiconductor substrates shall lead to a interface with high strength as well as gastightness not to allow gas leaking therethrough.

In Japanese laid open patent publication No.58-56476 is disclosed such a conventional process for joining together semiconductor substrates that two semiconductor substrates having pressure sensing components formed thereon by micro-machining are superposed upon each other with glass solder and heated, being pressed, up to about 470°C so as to form a joint of higher strength and gastightness.

Attaching a silicon substrate to a Cu or Al support via a ceramic, glass, or resin layer is described in US patent US-4,756,190. The joining together of piezoelectric diaphragms is sketched in European patent application EP-A0037794. The US patent US-4,891,977 describes an improved bonding of an electrical connecting pad of gold on a silicon substrate.

The above-mentioned method with glass soldering may be useful for joining two semiconductor substrates constituting the pressure sensor, but it can not be applied for joining two semiconductor substrates of a gas flow sensor having a thermosensitive resistor elements because that heating the substrates with glass solder at high temperature may cause a change of the characteristic of the thermosensitive resistor elements.

The problem of the prior art to be solved is that when two semiconductor substrates, each of which has micro-machined thereon components for forming a gas flow path of the gas flow sensor, are placed on each other and joined with glass solder by heating them in pressed state at high temperature, thermosensitive resistor elements provided in the gas flow path are reversely affected by soldering temperature.

### SUMMARY OF THE INVENTION

This invention provides a method of making a semiconductor type gas flow sensor for sensing a change of gas flow by means of thermo-sensitive resistance elements, said sensor comprising two semiconductor substrates, at least one having an etched groove therein for forming a gas flow path, said method comprising mounting one substrate on the other and joining them together to form, by means of said groove, said gas flow path therebetween, characterized by coating said substrates on the surfaces to be joined together respectively with soldering films of respectively dissimilar metals which may be alloyed together by heating, said joining step comprising heating the substrates while they are pressed together to form an alloyed metal joint between the dissimilar metals.

In view of the foregoing, the present invention was made to produce a semiconductor type gas flow sensor composed of two semiconductor substrates, at least one of which has an etched thereon groove constituting a gas flow path, and which are superposed on each other with soldering layers of dissimilar metals to be alloyed at a relatively low temperature and heated in pressed state to form therebetween an alloyed metal joint of high strength and gastightness without affecting the characteristic of thermosensitive resistor elements provided in the gas flow path.

### BRIEF DESCRIPTION OF DRAWINGS

Fig. 1 is a front view showing an example of two semiconductor substrates constituting a gas flow sensor embodying the present invention, each of which has a formed thereon groove, and both of which are to be joined with each other so as to match grooves to form a gas flow path.

Fig. 2 is a perspective view showing, by way of example, construction of a semiconductor type gas flow sensor embodying the present invention.

Fig. 3 is a plan view of a lower side semiconductor substrate of the sensor's body shown in Fig. 2.

Fig. 4 is a front sectional view of the sensor's body shown in Fig. 2.

In the drawings, 1 is a lower semiconductor substrate, 2 is an upper side semiconductor substrate, 3 is a nozzle hole, 4 is a gas flow path, 51 and 52 are paired heat wires.

### DESCRIPTION OF THE PREFERRED EMBODIMENTS

Referring now to the accompanying drawings, preferred embodiments of the present invention will be described in detail as follow.

In a semiconductor type gas flow sensor, as shown in Figs. 2, 3 and 4, its body portion is constructed in such a way that a lower semiconductor substrate 1 having an etched thereon half groove 41 and an upper semiconductor substrate 2 having an etched half groove 41 are joined together with their half grooves 41 matched to form a gas flow path 4 in the body portion.

The lower semiconductor substrate 1 has an etched thereon bridge portion 6 whereon a pair of heat wires 51 and 52 are formed by pattern forming.

The lower semiconductor substrate 1 and the upper semiconductor substrate 2 also have each an etched half-hole 31 constituting a nozzle hole 3 for injecting therethrough gas supplied by a micropump into the gas flow path 4 formed when both substrates joined with each other.

The semiconductor type gas flow sensor having a thus constructed sensor body is capable of electrically detecting a deflection of a laminar flow of gas constantly injected by a micropump (not shown) into the gas flow path 4 through the nozzle hole 3. When a deflection of the gas flow in the gas path 4 of the sensor body is caused by the action of an angular velocity applied on the sensor body, it can be detected electrically through a change of resistances in the paired heat wires 51 and 52 which together with a standard resistance forms a bridge circuit. An output of this circuit is a signal of detected angular velocity.

The making of a semiconductor type gas flow sensor according to the present invention is characterized in that the lower semiconductor substrate 1 and the upper semiconductor substrate 2 are coated at their joinable surfaces with thinly deposited dissimilar metals to be alloyed at a relatively low temperature and then are placed on each other and heated in pressed state to form an alloyed metal joint therebetween.

In practice, as shown in Fig. 1, the joinable surfaces of the lower semiconductor (silicone) substrate 1 and the upper semiconductor (silicone) substrate 2 are covered each with a deposited film of titanium as a base metal and then the lower substrate 1 is covered at its deposited base metal surface with a deposited thereon thin film of, for example, gold (Au) as one of dissimilar metals solderable by heating to form alloyed metal joint and the upper substrate is covered at its deposited base metal surface with a deposited thereon thin film of, for example, tin (Sn) as the other of dissimilar metals.

The base metal of titanium (Ti) is deposited so as to improve the adhesion of two substrates, if it is needed. It is also possible to use nickel (Ni) or platinum (Pt) instead of titanium (Ti).

For instance, a titanium (Ti) layer of 500 nm thick is deposited on both substrates and then a gold (Au) layer of 1 µm thick is deposited on one substrate and a tin (Sn) layer of 0.66 µm is deposited on the other substrate so as to form an alloyed metal joint composed of Au 20% and Sn 80%. The lower semiconductor substrate 1 and the upper semiconductor substrate 2 are placed on each other and heated, being pressed by a weight of about 1 kg/cm², for 5 minutes at temperature of 250 - 400°C, thereby the process of alloying dissimilar metals may uniformly go on to form a strong, gastight and well adhered metal joint between the lower and upper semiconductor substrates 1 and 2.

At the same time, as the metals is alloying, the joint strength increases and interface between gold (Au) and tin (Sn) layers disappears to get gastightness.

In case of using the soldering material composed of gold and tin it is possible to make them be alloyed at a heating temperature lower than the melting point of single component, thereby allowing the semiconductor substrates 1 and 2 to be joined together by alloy metal joint formed therebetween without causing any deterioration of thermo-sensitive resistance characteristic of the heat wires 51 and 52.

Accordingly, when an optimum heating temperature is selected, the process of alloying the soldering metals can be well developed without extrusion of molten solder, resulting in forming an optimum alloyed metal joint.

It must be noted that the alloying process is retarded at a heating temperature lower than 250°C and the extrusion of soldering material from the boundary of joinable surfaces may occur at a heating temperature higher than 400°C.

In case if single element is used as a soldering material for the lower semiconductor substrate 1 and the upper semiconductor substrate 2, it is necessary to heat the soldering material till being softened, that may cause extrusion of the solder metal from the boundary of the joined surfaces.

As be apparent from the foregoing description, the semiconductor type gas flow sensor according to the present invention, which body is composed of two semiconductor substrates, at least one having an etched groove constituting a path, and includes thermosensitive resistor elements for detecting a change of gas flow in the formed thereon gas path, can offer such an advantage that since the semiconductor substrates are covered at their joinable surfaces each with one of dissimilar metals thinly deposited thereon, placed on each other and heated in pressed state, it is possible to join together the semiconductor substrates by forming therebetween an alloyed metal joint of high strength and good gastight adhesion at a relatively low heating temperature, thereby exerting no reverse affection to the thermosensitive resistor elements placed in the gas path.

## Claims

1. A method of making a semiconductor type gas flow sensor for sensing a change of gas flow by means of thermo-sensitive resistance elements (51, 52), said sensor comprising two semiconductor substrates (1, 2), at least one having an etched groove (41) therein for forming a gas flow path (4), said method comprising mounting one substrate on the other and joining them together to form, by means of said groove (41), said gas flow path (4) therebetween,
**characterized by**
coating said substrates (1, 2) on the surfaces to be joined together respectively with soldering films of respectively dissimilar metals which may be alloyed together by heating, said joining step comprising heating the substrates while they are pressed together to form an alloyed metal joint between the dissimilar metals.

2. A method of making a semiconductor gas flow sensor according to claim 1,
**characterized in that**
base metal, e.g. titanium (Ti) or nickel (Ni) or platinum (Pt), is deposited in a thin film on joinable surfaces of both semiconductor substrates and then soldering material is deposited in a thin film thereon.

## Patentansprüche

1. Verfahren zum Herstellen eines Halbleiter-Gasflußsensors zum Erfassen einer Gasflußänderung mittels thermosensitiver Widerstandselemente (51, 52), wobei der Sensor zwei Halbleitersubstrate (1, 2) umfaßt, von denen wenigstens eines eine geätzte Aussparung (41) darin zur Bildung eines Gasflußwegs (4) aufweist, wobei das Verfahren das Anbringen eines Substrats an dem anderen und deren Verbinden miteinander umfaßt, um mittels der Aussparung (41) den Gasflußweg (4) dazwischen zu bilden,
gekennzeichnet durch
Beschichten der Substrate (1, 2) an den miteinander zu verbindenden Flächen jeweils mit Lötfilmen von jeweils verschiedenen Metallen, welche durch Heizen zusammenlegiert werden können, wobei der Verbindungsschritt das Heizen der Substrate, während sie zusammengepreßt werden, umfaßt, um eine legierte Metallverbindung zwischen den verschiedenen Metallen zu bilden.

2. Verfahren zum Herstellen eines Halbleiter-Gasflußsensors nach Anspruch 1,
dadurch gekennzeichnet,
daß ein Basismetall, beispielsweise Titan (Ti) oder Nickel (Ni) oder Platin (Pt) in einem dünnen Film auf verbindungsfähigen Flächen beider Halbleitersubstrate abgelagert wird und dann Lötmaterial in einem Film darauf abgelagert wird.

## Revendications

1. Procédé de fabrication d'un capteur de débit de gaz de type à semi-conducteur destiné à détecter une modification du débit de gaz au moyen d'éléments de résistance à sensibilité thermique (51, 52), ledit capteur comprenant deux couches de semi-conducteurs (1, 2), au moins l'une d'entre elles comportant une gorge (41) creusée dans elle afin de former un passage de débit de gaz (4), ledit procédé comprenant le montage d'une sous-couche sur l'autre et leur assemblage dans le but de former entre elles, au moyen de ladite gorge (41), ledit passage de débit de gaz (4),
caractérisé par
le revêtement des surfaces des dites sous-couches (1, 2) devant être assemblées respectivement avec des couches de soudage de métaux respectivement différents qui puissent former ensemble un alliage par chauffage, ladite phase d'assemblage comprenant le chauffage des sous-couches alors qu'elles sont pressées l'une contre l'autre afin de former un joint en alliage de métal à partir de métaux différents.

2. Procédé de fabrication d'un capteur de débit de gaz de type à semi-conducteur selon la revendication 1,
caractérisé en ce que
le métal de base, par exemple du titane (Ti) ou du nickel (Ni) ou du platine (Pt) est déposée en mince couche sur des surfaces d'assemblage des deux sous-couches de semi-conducteur et qu'ensuite un matériau de soudage est déposé sur celles-ci en une mince couche.
